Europäisches Patentamt

European Patent Office

Office européen des brevets

(19)

(11) Publication number: **0 041 087**
**A1**

# EUROPEAN PATENT APPLICATION

(12)

(21) Application number: 80301835.7

(22) Date of filing: 03.06.80

(51) Int. Cl.³: **B 60 S 3/04**

(43) Date of publication of application:
09.12.81 Bulletin 81/49

(84) Designated Contracting States:
AT BE CH DE FR GB IT LI LU NL SE

(71) Applicant: SAUNDERS TRANSPORT LIMITED
G.L.C. Refuse Transfer Station Charlton Lane
Shepperton Middlesex TW17 8QA(GB)

(72) Inventor: May, F.H.
Lower Crabb Five Ashes Near Mayfield
East Sussex TN20 6HJ(GB)

(72) Inventor: Quick, P.D.
Charlton Lane
Shepperton Middlesex TW17 8QA(GB)

(72) Inventor: Beadle, K.J.
Charlton Lane
Shepperton Middlesex TW17 8QA(GB)

(74) Representative: Allam, Peter Clerk et al,
LLOYD WISE, TREGEAR & CO. Norman House 105-109
Strand
London WC2R 0AE(GB)

(54) Wheel cleaner with powered rollers.

(57) A wheel cleaner for cleaning the ground wheels of heavy road transport vehicles has a frame (15) in which are mounted two pairs of horizontal rollers (11, 12, 13, 14) on which the wheels on tandam axles of a vehicle are spun to throw off dirt and stones by centrifugal action. The second roller (12, 14), in the direction of vehicle travel, of one or both pairs of rollers is driven by an internal combustion engine (23) through a hydrostatic fluid transmission system (26, 27, 28) so that both engine-driven truck wheels and non-driven or trailing wheels can be spun for cleaning. Water jets are provided, supplied by a water pump driven by one of the rollers, to ensure that the wheels tyres are completely cleaned. The second pair of rollers is mounted to slide horizontally toward and away from the first pair, and is spring-urged toward the first pair, to enable the spacing of the pairs of rollers to adjust to the spacing of tandem axles on a vehicle as the vehicle is driven on.

Fig.1

EP 0 041 087 A1

This invention relates to wheel cleaners for the roadwheels of trucks.

Multi-wheeled transport trucks that leave the road to visit building sites, farms, refuse tips, open cast mines, quarries, special sites for the disposal of waste products and soforth are likely to collect considerable quantities of mud, earth, stones and other materials on their wheel tyres and there are official regulations against the deposit of such materials on the road when a vehicle returns to the public highway. Therefore, wheel cleaners exist for the removal of such materials from the wheels, one popular type comprising rollers on which the truck wheels rest while they are driven by the truck engine so that mud, earth stones and etc. are thrown off the spinning wheels by centrifugal action. The driver accelerates the engine until the speedometer indicates a road speed of some 30 to 40 m.p.h. at which the wheels are rotating at about 240 to 320 r.p.m. which is normally adequate to spin off materials adhered to the wheel tyres.

However, no wheel cleaner exists that is sufficiently versatile to clean completely all the wheels, whether driven or not, of road transport vehicles of any size, weight and axle spacing. One problem is that, in a wheel cleaner in which the truck wheels are cleaned by centrifugal action, driven wheels can be spun on the cleaner rollers but non-driven or trailing wheels cannot. Commonly, it is the driven wheels on which earth and other materials most tend to lodge; but trucks using tips for the disposal

of toxic wastes are quite liable to pick up such toxic materials on their wheels and it is highly undesirable that even small amounts of such materials, either borne on trailing wheels of a vehicle or still remaining lodged on driven wheels after spinning, might cause a health hazard by being spread on the public highways. Another problem is that the known wheel cleaners have two pairs of rollers to receive the wheels on tandem axles of a truck and therefore spaced at a distance chosen to suit the spacing of those axles, which means that if vehicles with different tandem axle spacings are employed at the same site not all of them can have their wheels cleaned.

These problems have been aggravated by Britain's membership of the E.E.C. which has markedly increased the members of mainland Continental vehicles appearing on the roads. Whereas hitherto British hauliers visiting building sites and refuse tips used a reasonably standard pattern of heavy goods vehicle and practically never operated articulated vehicles, the advent of Continental vehicles has resulted in increasing diversity in the types of vehicles employed with variations in axle arrangement and spacing, semi-trailers being already in use and draw-bar trailers, of which large numbers are used on the Continental mainland, being expected.

It is therefore an object of the present invention to achieve a wheel cleaner that can deal with such diversity of vehicle types.

According to the present invention, there is provided a wheel cleaner for cleaning the ground wheels of heavy road transport vehicles by centrifugal action, wherein at least two pairs of horizontal rollers are mounted in a frame on to which the vehicle is driven the pairs of rollers being at a spacing to suit the spacing of tandem axles of vehicles the wheels of which are to be cleaned, characterised by a motive power unit alongside the frame and driving connections coupling the motive power unit to at least the second (in the direction of travel of a vehicle on to the rollers) of one pair of rollers, the driving connections including clutch or free wheel means enabling said roller to be driven alternatively by the rotation of truck wheels resting on the pair of rollers without hindrance from said driving connections.

Preferably, the motive power unit is an internal combustion engine and the driving connections include a variable angle swash plate pump driven by the engine and a hydraulic motor coupled to the roller and driven by a supply of hydraulic oil from the pump. The use of an internal combustion engine overcomes the difficulty that at many sites no electrical power is available. However, as an alternative to hydraulic drive, electrical power supplied by an engine/generator set could be employed.

In the preferred arrangement also, the second rollers of both pairs of rollers have driving connections from the motive power unit.

To ensure that the wheels are completely clean water jets may be provided for washing the tyres of wheels on the pairs of rollers, the water supply for the jets being supplied by a pump driven by one of the rollers.

To enable the same wheel cleaner to receive vehicles with different tandem axle spacings, one pair of rollers may be mounted for relative movement horizontally toward and away from the other pair of rollers. If the second pair of rollers is mounted on side members that are slidable along the frame and spring-urged toward the first pair of rollers, the spacing distance of the pairs of rollers will automatically adjust to the axle spacing of a vehicle as the vehicle drives on to the rollers.

Arrangements according to the invention will now be described by way of example with reference to the accompanying drawings in which:-

Figure 1 is a diagrammatic pictorial view of a wheel cleaner with power-driven rollers,

Figure 2 is a view in section showing the coupling of a hydraulic motor to a roller in the machine of Figure 1,

Figure 3 is a diagrammatic pictorial view of a wheel cleaner with auxiliary water jets,

Figure 4 is a view in section showing the coupling of a water pump to a roller in the machine of Figure 3, and

Figure 5 is a diagrammatic pictorial view of a wheel cleaner with relatively sliding pairs of rollers.

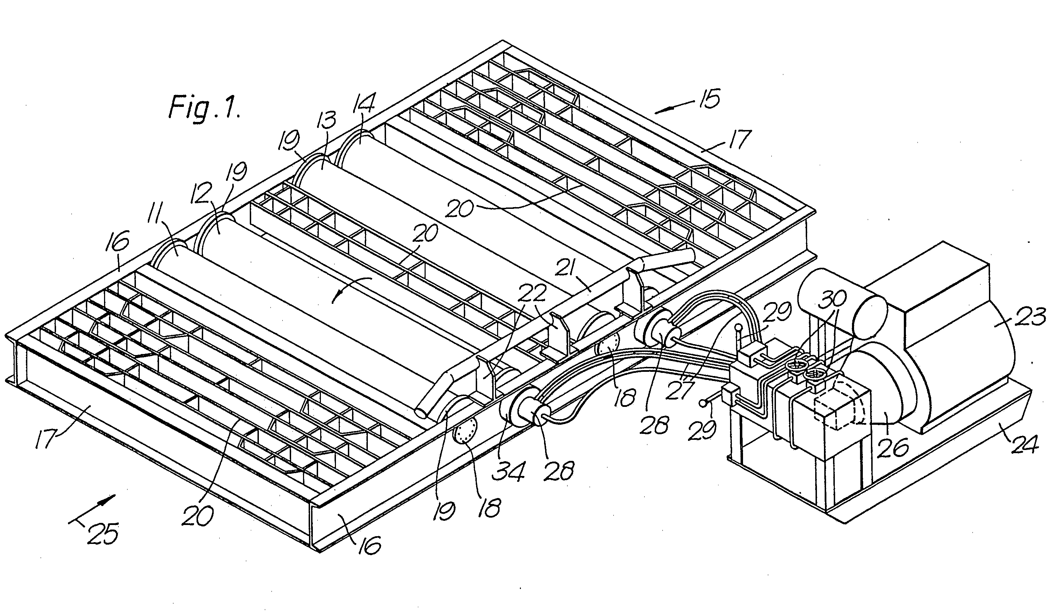

Referring firstly to Figure 1, this shows a wheel cleaner in which four horizontal rollers 11, 12, 13, 14, of say 14 inches diameter and each 8 ft 6 inches in length, are mounted in a rectangular frame 15, which may be 16 ft long, 9 ft wide and 15 inches deep, constructed from steel channel-section longitudinal side beams 16 and crosswise end beams 17. The rollers, which have ½ inch thick walls and end flanges 19, are mounted across the frame on 3 inch diameter solid hardened steel shafts received in bearings 18 in the side beams and are disposed in two pairs 11, 12 and 13, 14. The two rollers in each pair are spaced at a distance such that the wheels on one axle of a truck can be spun on the two rollers without either tending to jump off the rollers or dropping so far into the "valley" between them as to cause problems when the truck is driven on and off the wheel cleaner, and the greater spacing between the two pairs of rollers is such as to allow the wheels of two tandem truck axles to rest on the two pairs of rollers simultaneously. Between the two pairs of rollers, and between each pair and the nearer end beam 17, the gaps in the frame 15 are filled by removable steel gridwork sections 20 which support the truck wheels while allowing dirt and stones from the wheels to fall through.

At one side of the frame 15, mechanism is provided for locking the rollers to enable trucks to be driven on and off the wheel cleaner. This mechanism comprises four locks associated with the flanges 19 on the rollers which locks are all operated simultaneously by a single operating handle. The locking mechanism and handle are omitted from the drawing for the sake of clarity but a safety rail 21 is shown which serves to protect the locking mechanism, this safety rail being mounted on brackets 22 on the side beam 16.

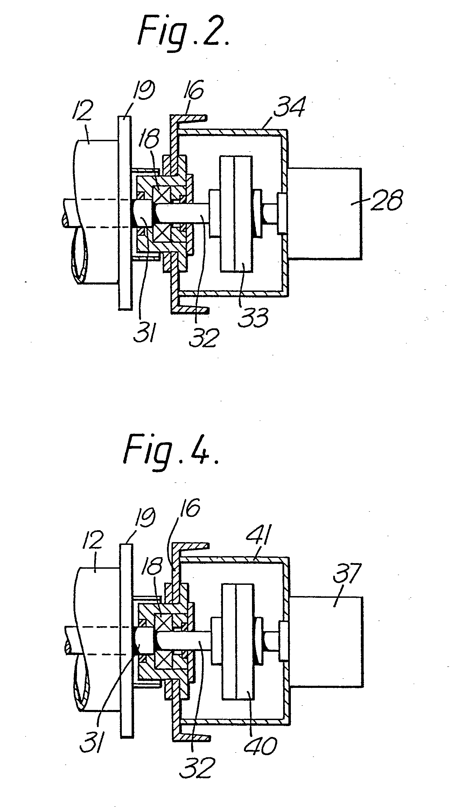

Either one or two of the rollers of the wheel cleaner can be power-driven by a diesel engine 23 mounted on a skid base 24 alongside the frame 15. The direction taken by a truck travelling on to the wheel cleaner is indicated by the arrow 25, and the roller principally chosen to be power driven is the second roller 12 of the first pair of rollers 11, 12 that the truck wheels reach. This second roller of the pair is chosen because there is greater adhesion between this roller and the wheel tyres when the wheels are spun. When two rollers of the wheel cleaner are to be driven then the second roller 14 of the second pair of rollers 13, 14 is also chosen. An air-cooled engine developing about 50 or 60 brake horse power at say 2200 r.p.m. may be employed, driving a variable displacement swash plate pump 26 that supplies hydraulic oil via hoses 27 to hydraulic motors 28 mounted on the side beam 16 and coupled to the shafts of the two power-driven rollers 12 and 14. This will drive the rollers at speeds up to, say, 750 r.p.m., individual drive selectors 29 and free wheel selectors 30 being provided for the two rollers. Should a roller be overloaded, the result would be that the roller would not reach the maximum speed but otherwise there would be no damaging effects. Figure 2 shows that each power driven roller shaft 31 has an extension 32 beyond the bearing 18 in the side beam 16 which extension is coupled to the hydraulic motor 28 by a flexible coupling 33, the motor being mounted on a housing 34 on the side beam 16 which encloses the shaft extension and coupling.

Thus, the wheel cleaner can be employed for cleaning all the wheels of a truck or trailer, whether they be driven wheels or trailing wheels. The rollers are locked to enable the truck to be driven on to the wheel cleaner and then if driven wheels rest on the rollers those wheels can be spun by the truck drive at a speed sufficient to throw dirt and stones off the wheels by centrifugal action, with the hydraulic motors 28 simply free wheeling, or if the wheels are trailing wheels then they can be spun by rotating the rollers by means of the diesel engine and hydraulic power transmission.

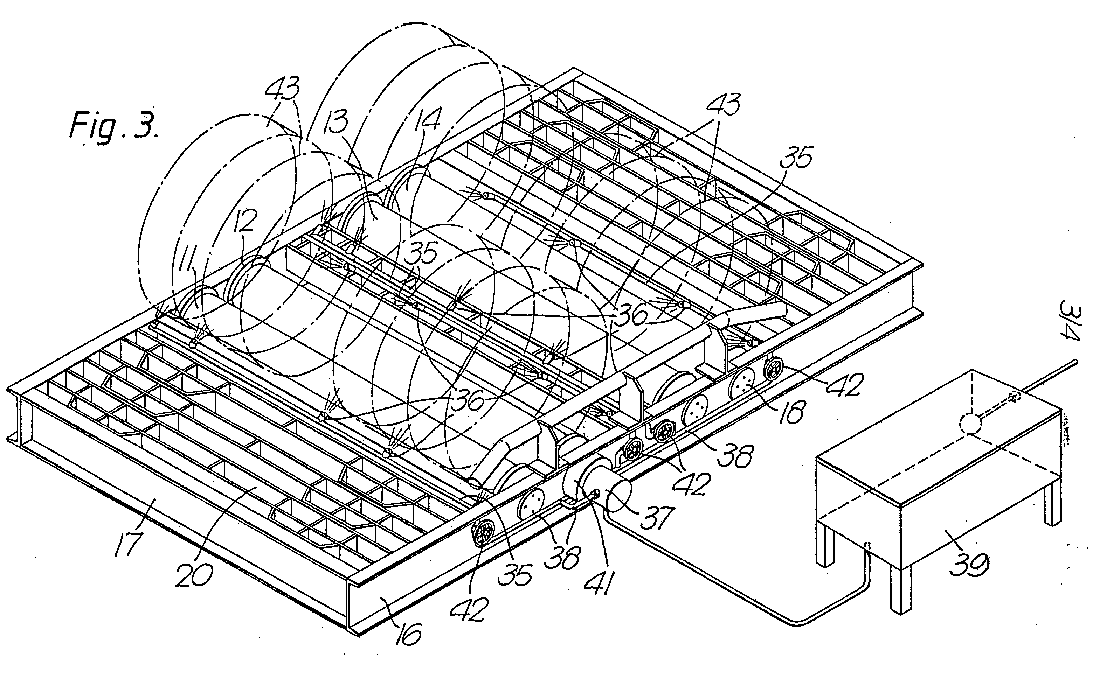

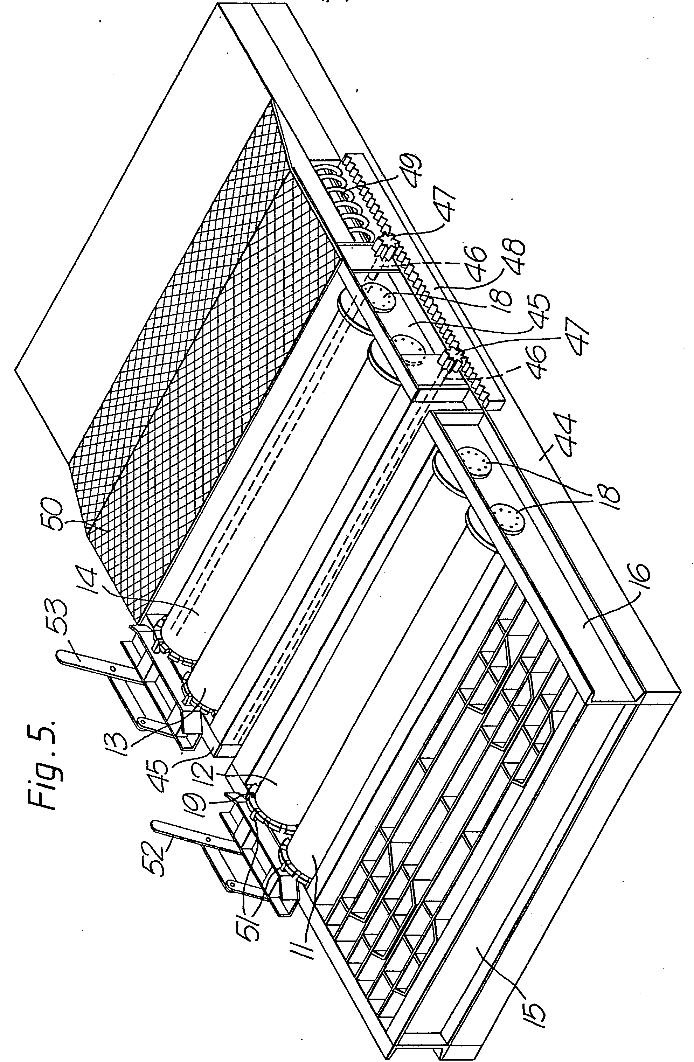

Turning now to Figures 3 and 4 of the drawings, these show a modification of the wheel cleaner in which the cleaning by centrifugal action resulting from spinning of the truck wheels is supplemented by the use of water jets. Four pipes 35 extend horizontally across the frame 15, at positions ahead of and behind each pair of rollers 11, 12 and 13, 14, each pipe bearing a number of high pressure jet nozzles 36. The jet pipes 35 are supplied with water under pressure by a rotary high pressure pump 37 through pipes 38. The pump draws water from a water tank 39 alongside the wheel cleaner and is mounted in similar fashion to the hydraulic motors in Figures 1 and 2. That is to say, an extension 32 of the shaft 31 of roller 12 is coupled to the pump shaft by a flexible coupling 40 and the pump itself is carried on a housing 41 secured to the side-beam 16 which encloses the shaft extension and flexible coupling. Individual shut-off valves 42 control the water supplies to the four jet pipes 35.

Four pairs of wheels on two axles of a truck are shown in position on the wheel cleaner in broken lines at 43, and the jet nozzles 36 are positioned so as to direct high pressure jets of water on to the wheels at both side walls of each wheel. When the wheels are spun, and irrespective of whether the roller 12 is driven by the truck wheels 43 or by the engine 23 of Figure 1, the pump 37 will operate to supply water under pressure to all the jets 36, or to such of the jets as are supplied with water under pressure through the control valves 42.

Figure 5 shows a further modification of the wheel cleaner to accommodate trucks with different distances between tandem axles. The second pair of rollers 13, 14 is able to change its distance from the first pair of rollers 11, 12 by being mounted on a slide as will now be described. The frame 15 of the wheel cleaner is, in this case, mounted on a fixed base 44, and the side beams 16 are comparatively short and only provide bearings for the first pair of rollers 11, 12. The rollers 13, 14 of the second pair are mounted in bearings 18 carried by sliding channel members 45 which can slide in guides along the fixed base 44 and are kept in alignment with one another across the wheel cleaner during sliding by cross shafts 46 journalled in the channel members 45 and carrying pinions 47 that engage with racks 48 fixed to the base 44 at both sides of the machine. Compression springs 49 housed in telescopic tubes are provided to urge the roller pair 13, 14 on their slides 45 toward the roller pair 11, 12.

When the pair of rollers 13, 14 is in its position closest to the rollers 11, 12, with the springs 49 extended, the two pairs of rollers will accommodate wheels on tandem axles at ordinary spacing. In the case of a vehicle having a longer than normal tandem axle spacing, the wheels on the front axle will first settle on the rollers 13, 14 and then as the wheels on the rear axle move on to the rollers 11, 12 the rollers 13, 14 will automatically be pushed forward away from the rollers 11, 12, compressing the springs 49, until both sets of wheels are settled on their respective rollers and the slide rollers have taken up a position appropriate to the axle spread to be accommodated. When the truck wheels have been cleaned and have left the rollers, the springs will return the rollers 13, 14 to their original position. A spring-loaded pawl or pawls may be provided to engage the teeth of one or both racks 48 and lock the slide rollers in any desired position.

The distance through which the roller pair 13, 14 is able to slide can appropriately be up to 1 ft 6 inches. To span the variable gap or gaps that result ahead of or behind the rollers as a consequence of this movement, sliding bridging plates or grids can be provided, as at 50.

As already described, locks are provided for locking the rollers so as to enable trucks to be driven on and off the wheel cleaner. In Figure 5, the locks 51 are shown co-operating with the roller flanges 19 and, whereas normally the locks for all four rollers are operated by a single handle, in this case the locks for the first pair of rollers 11, 12 and the second pair of rollers 13, 14 are independently operated by separate handles 52, 53 to allow for the relative sliding of the two pairs of rollers.

Whereas the power drive to the rollers has not be shown in Figures 3 to 5, it will be understood that equally in wheel cleaners have water jets and relatively sliding pairs of rollers one or more of the rollers can be power driven. Indeed the drive by means of hydraulic motors as shown in Figures 1 and 2 is particularly advantageous in the case of the arrangement of Figure 5 because the flexible hoses supplying the motors will readily permit the relative sliding of the pairs of rollers. It will further be understood that the power driving arrangements, the pump for the water jets and the roller locks can each equally be fitted at either side of the wheel cleaner so installation of one does not hinder the presence of the others. Thus, an extremely versatile wheel cleaner is provided that can be used at remote sites where no electrical power is available. To provide water for the water jets if no piped water supply is available a natural source of water can be employed or water can be collected from the pit below the wheel cleaner, filtered and recycled. The jet nozzles themselves can be adjustable to suit different wheel tracks.

**0041087**

CLAIMS

1.    A wheel cleaner for cleaning the ground wheels of heavy road transport vehicles by centrifugal action, wherein at least two pairs of horizontal rollers are mounted in a frame on to which the vehicle is driven the pairs of rollers being at a spacing to suit the spacing of tandem axles of vehicles the wheels of which are to be cleaned, characterised by a motive power unit alongside the frame and driving connections coupling the motive power unit to at least the second (in the direction of travel of a vehicle on to the rollers) of one pair of rollers, the driving connections including clutch or free wheel means enabling said roller to be driven alternatively by the rotation of truck wheels resting on the pair of rollers without hindrance from said driving connections.

2.    A wheel cleaner according to claim 1, wherein the motive power unit is an internal combustion engine and the driving connections include a variable angle swash plate pump driven by the engine and a hydraulic motor coupled to the roller and driven by a supply of hydraulic oil from the pump.

3.    A wheel cleaner according to claim 1 or claim 2, wherein the second rollers of both pairs of rollers have driving connections from the motive power unit.

4.    A wheel cleaner according to claim 2, or claims 2 and 3, wherein the or each hydraulic motor is mounted on a side member of the frame and is connected by a flexible coupling to an extension of the roller shaft which is journalled in a bearing on said side member.

5. A wheel cleaner according to any one of the preceding claims, wherein water jets are provided for washing the tyres of wheels on the pairs of rollers, the water supply for the jets being supplied by a pump driven by one of the rollers.

6. A wheel cleaner according to claim 5, wherein the water jets are on four horizontal pipes extending across the frame, there being one pipe in front of and one pipe behind each pair of rollers with the jets arranged to direct water on to all the side walls of the wheel tyres.

7. A wheel cleaner according to any one of the preceding claims, wherein one pair of rollers is mounted for relative movement horizontally toward and away from the other pair of rollers.

8. A wheel cleaner according to claim 7, wherein the second pair of rollers is mounted on side members that are slidable along the frame and spring-urged toward the first pair of rollers.

9. A wheel cleaner according to claim 8, wherein cross shafts journalled in the sliding side members bear pinions that engage racks at both sides of the frame to keep the sliding members in alignment as they travel.

10. A wheel cleaner according to claim 7 or claim 8 or claim 9, wherein roller locks are provided which have two independent operating handles for the two pairs of rollers.

11. A wheel cleaner according to any one of claims 7 to 10, wherein one or more bridging plates or grids are provided to travel with the moving pair of rollers to cover gaps over which the vehicles must pass.

Fig. 1.

0041087

## Fig.2.

## Fig.4.

Fig. 3.

Fig.5.

0041087

0041087

European Patent
Office

**EUROPEAN SEARCH REPORT**

Application number

EP 80 30 1835.7

| Category | Citation of document with indication, where appropriate, of relevant passages | Relevant to claim |
|---|---|---|
| | GB - A - 1 437 650 (TVI-TELEVISION INDUSTRIELLE) <br> * page 1, lines 10 to 27 * <br> --- | 1,2,5 |
| | DE - U - 1 943 777 (A. ENGELHARDT) <br> * page 2, lines 4 to 7, fig. 1 * <br> --- | 1,5 |
| | GB - A - 1 442 258 (W. MOSELEY LTD.) <br> * fig. 1 * <br> --- | 1,5 |
| | GB - A - 796 492 (H.K. WATSON) <br> * fig. 1 * <br> --- | 1,5 |
| | CH - A - 540 796 (G. CONTI) <br> * claim; fig. 1 * <br> --- | 7,8 |
| | GB - A - 2 026 411 (SAUNDERS TRANS-PORT LTD.) <br> * fig. 1 * <br> --- | 10 |
| | GB - A - 1 270 251 (SAUNDERS TRANS-PORT LTD.) <br> * claim 6 * <br> ---- | 10 |

**DOCUMENTS CONSIDERED TO BE RELEVANT**

**CLASSIFICATION OF THE APPLICATION (Int. Cl.3)**

B 60 S   3/04

**TECHNICAL FIELDS SEARCHED (Int.Cl.3)**

B 60 S   3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 12-01-1981 | BECKER |

EPO Form 1503.1   06.78